# EUROPÄISCHE PATENTSCHRIFT

(11) **EP 0 692 153 B1**
(45) Veröffentlichungstag und Bekanntmachung des Hinweises auf die Patenterteilung: **29.01.1997**
(21) Anmeldenummer: 94911167.8
(22) Anmeldetag: 14.03.1994
(51) Int. Cl.: H02G 15/184, H01R 13/53

(54) **ARMATUR FÜR LEITER VON HOCHSPANNUNGS-ENERGIEVERSORGUNGSNETZEN UND VERFAHREN ZU IHRER HERSTELLUNG**
ARMATURE FOR CONDUCTORS OF HIGH-VOLTAGE POWER SUPPLY SYSTEMS AND PROCESS FOR PRODUCING IT
ARMATURE POUR CONDUCTEURS DE RESEAU D'ALIMENTATION EN ENERGIE HAUTE TENSION ET SON PROCEDE DE FABRICATION

(30) Priorität: 29.03.1993 DE 4310125
(43) Veröffentlichungstag der Anmeldung: 17.01.1996
(73) Patentinhaber: KARL PFISTERER ELEKTROTECHNISCHE SPEZIALARTIKEL GMBH & CO. KG, 70327 Stuttgart (DE)
(72) Erfinder: BÄUERLE, Gottfried, D-70736 Fellbach (DE); SANDER, Dieter, D-70619 Stuttgart (DE); MÜLLER, Werner, D-70734 Fellbach (DE); SCHUSTER, Martin, D-73733 Esslingen (DE); SCHMID, Hermann, D-73650 Winterbach (DE)
(74) Vertreter: Patentanwälte Bartels, Held und Partner
(86) Internationale Anmeldenummer: EP9400790
(87) Internationale Veröffentlichungsnummer: WO9423481

(56) Entgegenhaltungen:
- EP-A- 0 060 930
- DE-A- 3 211 119
- DE-A- 3 418 665
- GB-A- 1 142 050
- US-A- 3 517 113
- US-A- 3 801 730

## Beschreibung

Die Erfindung betrifft eine Armatur mit den Merkmalen des Oberbegriffes des Anspruches 1 sowie ein Verfahren zur Herstellung einer derartigen Armatur.

Bei bekannten Armaturen dieser Art in Form von Verbindungsmuffen besteht der Schirm aus einem metallischen, formunstabilen Gitter. Da sich vielfach dieses Gitter während des Gießens des Isolierkörpers verschiebt und/oder deformiert, ist es nicht möglich, eine gleichmäßige Verteilung des elektrischen - Feldes zwischen der Kontaktiervorrichtung und dem Gitter zu gewährleisten. Außerdem muß man, um den noch zulässigen Mindestabstand zwischen dem Gitter und der Kontaktiervorrichtung nicht infolge einer Gitterdeformation zu unterschreiten den angestrebten Abstand größer als notwendig wählen, was nicht nur zu größeren Außenabmessungen der Muffe führt, sondern auch zu einem höheren Gewicht und insbesondere einem höheren Gießharzbedarf.

Dies gilt auch für eine bekannte Transformator-Mehrfachanschlußvorrichtung (DE 34 18 665 Al), bei welcher die Außenmantelfläche ihres aus Gießharz bestehenden Isolierkörpers die gleiche Form hat wie die Innenmantelfläche ihres metallischen Gehäuses. Ein elektrisch leitendes Schirmgitter ist in den Isolierkörper mit geringem Abstand von dessen Oberfläche eingebettet. Es hat daher eine Form, die der nach baulichen Gesichtspunkten ohne Beachtung der Konfiguration des elektrischen Feldes gestalteten Form angepaßt ist.

Der Erfindung liegt daher die Aufgabe zugrunde, eine Armatur mit einer verbesserten Schirmkonfiguration zu schaffen. Diese Aufgabe löst eine Armatur mit den Merkmalen des Anspruches 1.

Bei der erfindungsgemäßen Lösung, die nicht nur für Verbindungsmuffen und Abschlußmuffen in Frage kommt, ist die Konfiguration des Schirmes und seine Lage bezüglich der Kontaktiervorrichtung und einer eventuell im Isolierkörper vorhandenen Feldsteuervorrichtung durch die äußere Form des Isolierkörpers bestimmt. Diese kann problemlos so gewählt werden, daß der Schirm den kleinstmöglichen Abstand von der Kontaktiervorrichtung und/oder der Feldsteuervorrichtung und außerdem eine Konfiguration hat, die zu einer optimalen Feldverteilung und damit zu kleinstmöglichen Werten der Feldstärke führt. Dies gilt auch dann, wenn die Kontaktiervorrichtung und/oder die Feldsteuervorrichtung eine komplizierte Form des Schirmes erforderlich macht, wie sie mit einem Gitter nicht oder nicht mit vertretbarem Aufwand realisiert werden könnte. Bei der erfindungsgemäßen Lösung ist hingegen der Aufwand für den Schirm unabhängig von der gewünschten Konfiguration gering, da er durch eine Leitschicht gebildet wird, welche sich an jede beliebige Außenkonfiguration des Isolierkörpers anpaßt. Dank der definierten Lage des Schirmes und der Möglichkeit, diesem eine optimale Konfiguration zu geben, lassen sich auch minimale Außenabmessungen der Armatur und ein minimaler Gießharzbedarf erreichen.

Der Isolierkörper kann in einem vorzugsweise aus Metall bestehenden Gehäuse angeordnet sein. Er kann aber auch einen Innenteil bilden, der zumindest im Bereich seiner die Leitschicht tragenden äußeren Mantelfläche in einen aus Gießharz bestehenden Außenteil eingegossen ist, welcher die Außenfläche der Armatur bildet.

Bei einer bevorzugten Ausführungsform besteht die Leitschicht aus Aluminium.

Um die Leitschicht in einfacher Weise auf Erdpotential legen zu können, steht sie vorzugsweise in Kontakt mit metallischen Körpern, die von außen her zugänglich in den Isolierkörper eingebettet sind. Bei diesen metallischen Körpern kann es sich beispielsweise um Gewindebuchsen handeln, in welche Schrauben eingreifen, mittels deren mit der Armatur zu verbindende Teile, beispielsweise Kabelstecker, mit dem Isolierkörper verbunden werden, sofern nicht, wie beispielsweise bei einer Abschlußmuffe möglich, der Isolierkörper an seinem einen Ende geschlossen ist. Bei einer Ausbildung der Armatur als Muffe können die metallischen Körper aber auch durch je einen Ring gebildet sein, der auf einer Sitzfläche des Innenteils des Muffenkörpers aufliegt und in den Außenteil eingebettet ist. An einem solchen Ringkörper können problemlos Verbindungsstellen vorgesehen werden für Verbindungsleiter, welche vom einen zum anderen Ring geführt sind, um einen eventuell fließenden Schirmstrom der mittels der Muffe miteinander verbundenen Kabel zu führen. Die Leitschicht braucht dann nicht für den Schirmstrom dimensioniert zu sein. Selbstverständlich wäre es aber auch möglich, die Leitschicht auch auf wenigstens einer der beiden Stirnflächen des Isolierkörpers vorzusehen und hier die Kontaktierung vorzunehmen, indem beispielsweise das an diese Stirnfläche anzulegende Endteil, falls diese elektrisch leitend ist, oder Kontaktteile mit Hilfe des Endteils gegen diese Bereiche der Leitschicht gedrückt wird.

Die erfindungsgemäße Armatur kann beispielsweise auch als Transformator-Mehrfachanschlußvorrichtung ausgebildet sein. Der Isolierkörper ist dann vorteilhafterweise an das obere Ende eines Durchführungsisolators angeformt, mit diesem also einstückig ausgebildet. Der Durchführungsisolator umgibt dabei einen eine Öffnung des Transformatorgehäuses durchdringenden Anschlußbolzen, mit dem elektrisch leitend die Kontaktiervorrichtung verbunden ist, die wenigstens zwei parallel und im Abstand nebeneinander angeordnete Kontaktbuchsen für je einen Kabelstecker bildet. Ferner befindet sich vorzugsweise der Isolierkörper in einem haubenförmigen, metallischen Gehäuse, das in seiner Wand mit einer Durchtrittsöffnung für den Durchführungsisolator versehen und auf seiner offenen Seite, in welcher die Einführungskanäle münden, mit einer Metallplatte verschlossen ist, die auf die Einführungskanäle ausgerichtete Durchtrittsöffnungen für die Kabelstecker aufweist. Ein solches Metallgehäuse kann einstückig ausgebildet sein, sofern die Durchtrittsöffnung für den Durchführungsisolator ausreichend groß ist.

Bei einer derartigen Transformator-Mehrfachanschlußvorrichtung können jeweils zwei der Kontaktbuchsen durch einen Steg miteinander verbunden sein, der am Anschlußbolzen anliegt und mittels wenigstens einer Schraube an diesen angepreßt wird.

Der Erfindung liegt auch die Aufgabe zugrunde, ein Verfahren anzugeben, gemäß dem die erfindungsgemäße Armatur mit Vorteil hergestellt werden kann. Diese Aufgabe löst ein Verfahren mit den Merkmalen des Anspruches 10.

Bei einer bevorzugten Ausführungsform dieses Verfahrens wird die Leitschicht durch Flammspritzen aufgebracht, wobei vorzugsweise Aluminium verwendet wird, da zwischen diesem und Gießharz eine gute Haftung erzielt werden kann.

Sofern die metallischen Körper, welche die Leitschicht kontaktieren, in den Isolierkörper einer Muffe eingebettet werden, muß ein Teilbereich ihrer Oberfläche frei von Gießharz bleiben, damit hier der Kontakt mit der Leitschicht hergestellt werden kann. Werden die metallischen Körper hingegen nach der Herstellung des Isolierkörpers an dessen Außenfläche angelegt, dann muß darauf geachtet werden, daß ein guter Kontakt mit der Leitschicht vorhanden ist und nicht während des Gießens des Außenteils verlorengeht. Diese Gefahr besteht dann nicht, wenn die Metallkörper je als Ring ausgebildet sind, welche auf je eine Sitzfläche an beiden Enden des Isolierkörpers aufgeschoben werden. Dabei kann das Aufschieben auf die Sitzflächen vor oder nach dem Aufbringen der Leitschicht erfolgen. Es braucht nur Sorge dafür getragen zu werden, daß kein Spiel zwischen den Ringen und ihren Sitzflächen vorhanden ist.

Im folgenden ist die Erfindung anhand von in der Zeichnung dargestellten Ausführungsbeispielen im einzelnen erläutert. Es zeigen
- Fig. 1: einen Längsschnitt eines ersten Ausführungsbeispiels,
- Fig. 2: einen unvollständig dargestellten Längsschnitt eines zweiten Ausführungsbeispiels mit eingesetztem Kabelstecker,
- Fig. 3: einen Längsschnitt eines dritten Ausführungsbeispiels,
- Fig. 4: einen Längsschnitt eines vierten Ausführungsbeispiels,
- Fig. 5: eine Seitenansicht des vierten Ausführungsbeispiels,
- Fig. 6: einen Schnitt nach der Linie VI-VI der Fig. 4,
- Fig. 7: eine Ansicht von hinten eines Teils der Kontaktiervorrichtung des vierten Ausführungsbeispiels.

Eine Muffe zum Verbinden von zwei einadrigen Hochspannungs-Energieversorgungskabeln weist einen zu seiner Längsachse 1 rotationssymmetrischen Muffenkörper 2 auf, der aus einem Füllstoff, beispielsweise Quarzmehl, enthaltenden Gießharz besteht. Die Außenform des Muffenkörpers 1 könnte aber auch von der Rotationssymmetrie abweichen.

Der Muffenkörper 2 besteht aus einem Innenteil 3 und einem Außenteil 4. Konzentrisch zur Längsachse 1 ist eine aus einem elektrisch gut leitenden Werkstoff, insbesondere Kupfer oder einer Kupferlegierung, bestehende, zylindrische Kontaktbuchse 5 angeordnet, die bei der Herstellung des Innenteils 3 umgossen wird. Auf die beiden Endabschnitte der Kontaktbuchse 5 ist je ein Feldsteuerkörper 6 elektrisch leitend aufgesetzt. Diese Feldsteuerkörper 6 können elektrisch leitend oder mit einer elektrisch leitenden Schicht beschichtet sein. Die beiden gleich ausgebildeten, ringförmigen, die Kontaktbuchse 5 konzentrisch im Abstand umgebenden Feldsteuerkörper 6 haben beispielsweise einen Querschnitt in Form eines flachgedrückten Ringes. Sie stehen über das Ende der Kontaktbuche 5 über und werden von je einer mit Durchbrüchen versehenen Ringscheibe getragen.
Auf die beiden Enden der Kontaktbuchse 5 ist je ein konzentrisch zur Kontaktbuchse 5 angeordneter, konischer Hohlraum 7 ausgerichtet, der sich von der Stirnfläche 8 des Muffenkörpers 2 aus bis zur Kontaktbuchse 5 erstreckt und sich in dieser Richtung konisch verjüngt. In die beiden Endabschnitte des Innenteils 3 sind mit zur Längsachse 1 paralleler Achse über den Umfang gleichmäßig verteilt angeordnet Gewindebuchsen 9 eingegossen, die bündig mit einer sich radial nach außen erstreckenden Ringschulter des Innenteils 3 abschließen.

Der Innenteil 3 hat eine Außenkontur, deren Abstand von den beiden Feldsteuerkörpern 6 den für die Betriebsspannung der miteinander zu verbindenden Kabel kleinstmöglichen Wert hat. Außerdem hat die Außenmantelfläche des Innenteils 3 eine Konfiguration, die zu einer optimalen Verteilung des elektrischen Feldes führt, das zwischen den Feldsteuerkörpern 6 sowie dem von ihnen nicht abgeschirmten Teil der Kontaktbuchse 5 einerseits und einer Leitschicht 10 andererseits vorhanden ist, wenn die mittels der Verbindungsmuffe miteinander verbundenen Kabel ihre Betriebsspannung führen.

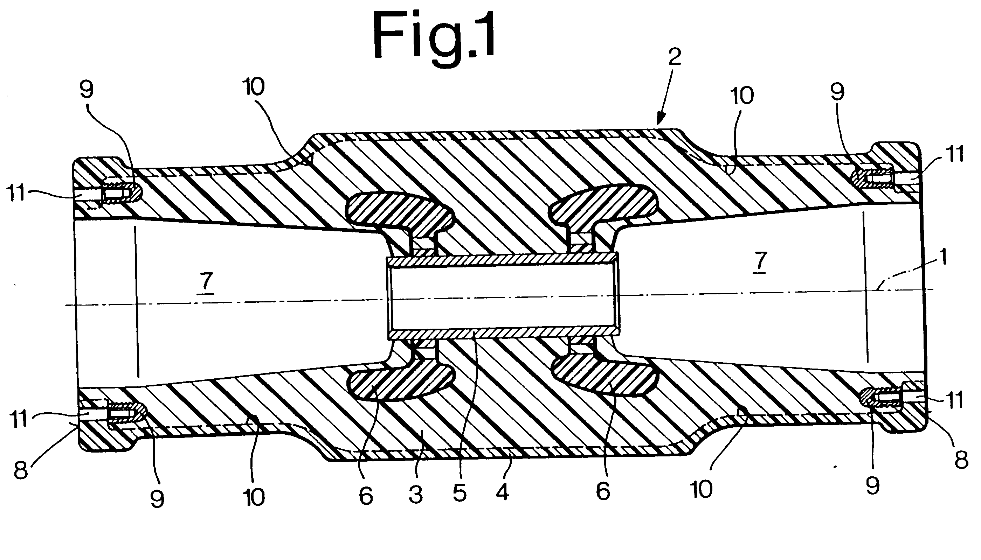

Die Leitschicht 10 ist auf die Außenmantelfläche des Innenteils 3 aufgebracht, und zwar im Ausführungsbeispiel durch Flammspritzen. Sie besteht beispielsweise aus Aluminium. Wie Fig.1 zeigt, wird die Leitschicht 10 auch auf die beiden Schultern des Innenteils 3 aufgebracht, mit denen die Gewindebuchsen 9 abschließen. Dadurch ist eine elektrisch leitende Verbindung zwischen der Leitschicht 10 und den Gewindebuchsen 9 vorhanden.

Nach der Fertigstellung des Innenteils 3 und dem Aufbringen der Leitschicht 10 auf dessen Außenmantelfläche wird der Innenteil 3 mit Gießharz umgossen, wobei der Außenteil 4 entsteht. Da die Leitschicht 10 eine gute Haftung mit Gießharz ergibt, ist eine gute Verbindung zwischen dem Innenteil 3 und dem Außenteil 4 vorhanden. Im Außenteil 4 werden Zugangslöcher 11 zu den Gewindebuchsen 9 ausgespart.

Die Verbindungsmuffe ist so ausgebildet, daß mit ihrer Hilfe zwei Kabel miteinander verbunden werden können, an deren Enden je ein in bekannter Weise ausgebildeter Kabelstecker vorgesehen ist. Beim Einführen dieser beiden Kabelstecker in die beiden konischen Hohlräume 7 werden die Steckkontakte in die Kontaktbuchse 5 eingesteckt. Außerdem kommt der außen konische Dichtungskörper der Kabelstecker in Anlage an die Innenwand des ihn aufnehmenden konischen Hohlraumes 7, wodurch der Muffenkörper 2 mechanisch und elektrisch dicht verschlossen wird. Diese Kabelstecker haben eine metallische Kappe, welche an der Stirnfläche 8 des Muffenkörpers 2 anliegt und mit diesem mittels Schrauben verbunden wird, welche in die Gewindebuchsen 9 eingreifen. Da diese Kappe über die Schirmdrähte des Kabels geerdet ist, ist auch die Leitschicht 10 geerdet, da zwischen ihr und der Kappe über die Schrauben eine elektrisch leitende Verbindung vorhanden ist.

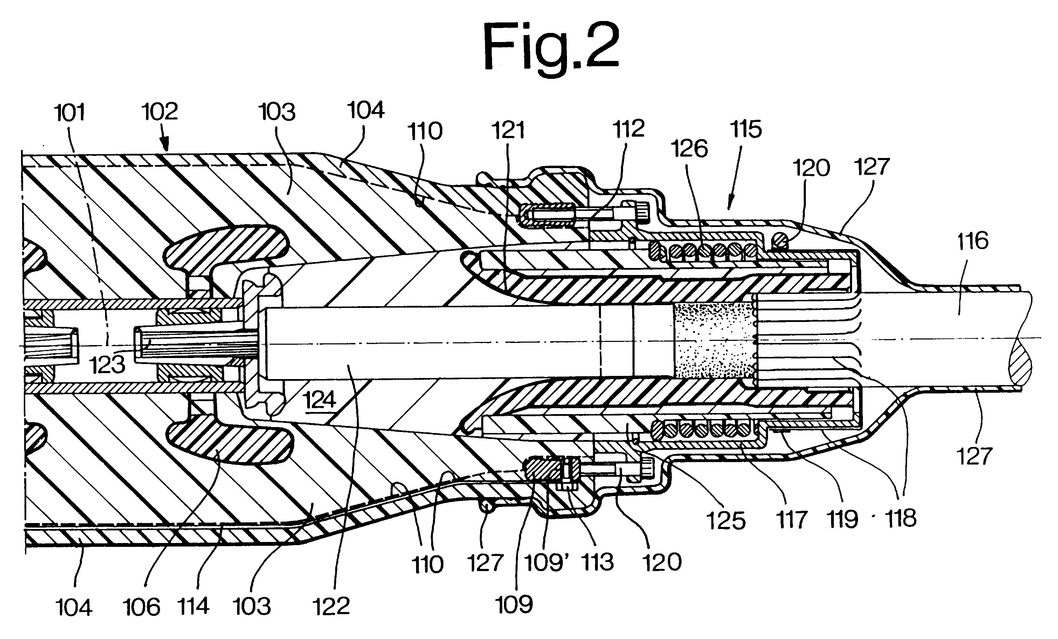

Das in Fig.2 unvollständig dargestellte zweite Ausführungsbeispiel der erfindungsgemäßen Verbindungsmuffe unterscheidet sich von der Ausführungsbeispiel gemäß Fig.1 nur wenig. Deshalb sind im folgenden nur die Abweichungen erläutert. Wegen der übrigen Einzelheiten kann auf die Ausführungen zu dem ersten Ausführungsbeispiel Bezug genommen werden. Sich entsprechende Teile sind mit um 100 größeren Bezugszahlen gekennzeichnet.

Der Innenteil 103 des Muffenkörpers 102 ist an seinen beiden Enden abgesetzt zur Bildung je einer vorzugsweise zylindrischen Sitzfläche 112. Diese ist wie der übrige Teil der Außenmantelfläche des Innenteils 103 mit der Leitschicht 110 versehen. Auf die beiden Sitzflächen 112 ist spielfrei. je ein Ringkörper 109 aufgeschoben, der aus einem elektrisch gut leitenden Material besteht und mit Rillen zur Verbesserung der Verbindung mit dem Gießharz versehen ist. Die Leitschicht 110 wird von der Innenmantelfläche der beiden Ringkörper 109 kontaktiert. Man kann aber auch den Ringkörper 109 vor dem Aufbringen der Leitschicht auf der Sitzfläche 112 festlegen, beispielsweise festkleben, und dann erst die Leitschicht aufbringen.

Die beiden Ringkörper 109 sind mit parallel zur Längsachse 101 verlaufenden Gewindebohrungen versehen, welche wie die Gewindebuchsen 9 des ersten Ausführungsbeispiels gleichmäßig auf dem Umfang verteilt angeordnet sind. Außerdem sind die Ringkörper 109 mit je einer radialen Gewindebohrung 109' zur Aufnahme je einer Schraube 113 versehen. Mittels dieser beiden Schrauben werden die beiden Enden eines bandförmigen Leiters 114 mechanisch fest und elektrisch leitend verbunden, der an der Leitschicht 110 anliegen kann und so dimensioniert ist, daß er einen gegebenenfalls über die Schirmdrähte der Kabel fließenden Strom führen kann. Der Außenteil 104 umhüllt den Innenteil 103 sowie die beiden Kontaktkörper 109 und bedeckt damit auch die Leitschicht 110.

Fig.2 zeigt auch, wie der als Ganzes mit 115 bezeichnete Kabelstecker ausgebildet ist, mit dessen Hilfe ein einadriges Hochspannungs-Energieversorgungskabel 116 mit der Verbindungsmuffe verbunden wird. Die aus Leichtmetall bestehende Kappe 117 des Kabelsteckers 115 weist einen zylindrischen Endabschnitt auf, an dessen Außenmantelfläche die Schirmdrähte 118 anliegen und mittels eines Spannbandes 119 in Anlage gehalten werden. Die Kappe 117 ist dadurch in elektrisch leitender Verbindung mit den Schirmdrähten 118. Andererseits ist die Kappe 117, welche an der Stirnfläche des Muffenkörpers 102 anliegt, wenn der Kabelstecker vollständig eingesteckt ist, über Spannschrauben 120 elektrisch leitend mit dem einen Ringkörper 109 verbunden, in dessen Gewindebohrungen die Spannschrauben 120 eingreifen.

Der aus Silikonkautschuk bestehende Isolierkörper des Kabelsteckers 115, in den ein Feldsteuerkörper 121 eingebettet ist und der an der Kunststoffisolation 122 anliegt, welche die Kabelseele 123 umgibt, ist mit 124 bezeichnet. Er wird mittels einer Druckhülse 125 in den konischen Hohlraum des Muffenkörpers 102 hineingedrückt, und zwar mit Hilfe einer vorgespannten Feder 126.

Sofern ein Feuchtigkeitsschutz erforderlich ist, was der Fall ist, wenn die Verbindungsmuffe unterirdisch eingesetzt wird, wird beispielsweise ein Schrumpfschlauch 127 vorgesehen, der die Kappe 117 überzieht, das an sie anschließende Ende des Muffenkörpers 102 übergreift und an diesem dicht anliegt sowie im Bereich seines anderen Endabschnittes dicht am Kabel 116 anliegt.

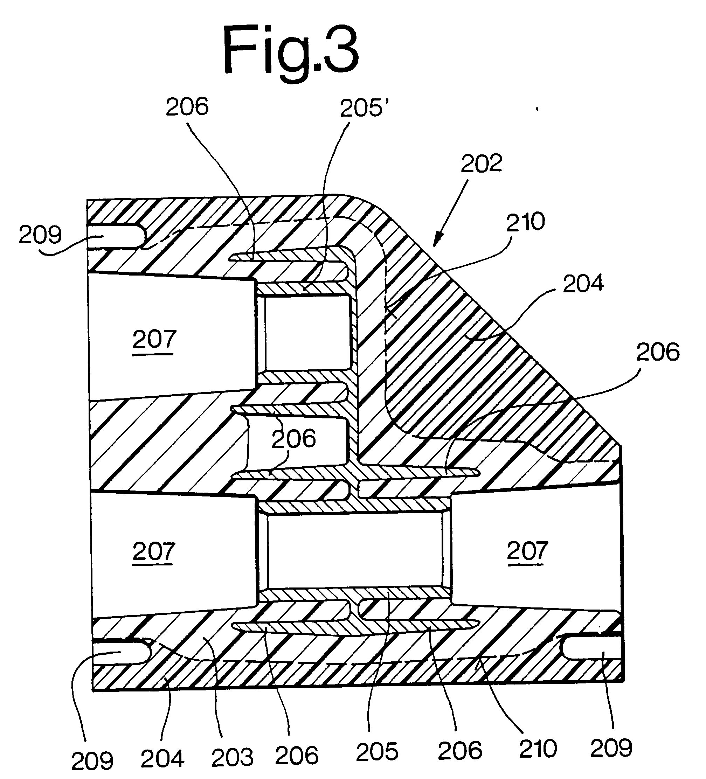

Die in Fig.3 dargestellte Verbindungsmuffe ermöglicht es, drei Kabel miteinander zu verbinden, und zwar im Ausführungsbeispiel wie bei der Verbindungsmuffe gemäß Fig.2 mittels je eines bekannten Kabelsteckers. Wie Fig.3 zeigt, ist an eine Kontaktbuchse 205 seitlich eine zu ihr parallel angeordnete, topfförmige Kontaktbuchse 205' angeformt. Außerdem werden sowohl die Kontaktbuchse 205 als auch die topfförmige Kontaktbuchse 205' im Abstand konzentrisch von je einem einstückig mit ihnen ausgebildeten, buchsenförmigen Feldsteuerkörper 206 umgeben, der über das freie Ende der Kontaktbuchse übersteht und den Endabschnitt des auf sie ausgerichteten konischen Hohlraums 207 übergreift. Diese Form des die Kontaktbuchsen und Feldsteuerkörper bildenden Metallkörpers führt zu einer erheblich von einer rotationssymmetrischen Konfiguration der Außenmantelfläche des Innenteils 203 abweichenden Form der Außenmantelfläche des Innenteils 203, wenn man den Abstand zwischen dieser Außenmantelfläche und den gegebenenfalls Spannung führenden Elementen so gering wie möglich halten will. Dadurch, daß wie bei den vorstehend beschriebenen Ausführungsbeispielen der Schirm durch eine auf die Außenmantelfläche des Innenteils 203 des Muffenkörpers 202 aufgebrachte Leitschicht 210 gebildet ist, macht die Realisierung einer Leitschicht mit optimaler Konfiguration auch bei diesem Ausführungsbeispiel keinerlei Schwierigkeiten. Die im Ausführungsbeispiel durch Flammspritzen aufgebrachte, beispielsweise aus Aluminium bestehende Metallschicht, welche die Leitschicht 210 bildet, paßt sich problemlos der Form der Außenmantelfläche des Innenteils 203 an. Der durch Umgießen mit einem elektrisch isolierenden Material, beispielsweise Gießharz, des ebenfalls aus einem elektrisch isolierenden Material, beispielsweise aus Gießharz bestehenden Innenteils 203 und der Leitschicht 210 gebildete Außenteil 204 braucht keine überall gleich große Wandstärke zu haben. Vielmehr kann die Außenkontur des Außenteils 204 frei gewählt werden.

Wie bei dem Ausführungsbeispiel gemäß Fig.2 liegen die in den Außenteil 204 eingebetteten Gewindebuchsen 209 an der Leitschicht 210 an, wodurch diese über die in die Gewindebuchsen 209 eingeschraubten Bolzen auf Erdpotential gelegt werden kann. Selbstverständlich wäre es auch möglich, anstelle der Gewindebuchsen 209 ringförmige Körper wie bei dem Ausführungsbeispiel gemäß Fig.2 zu verwenden.

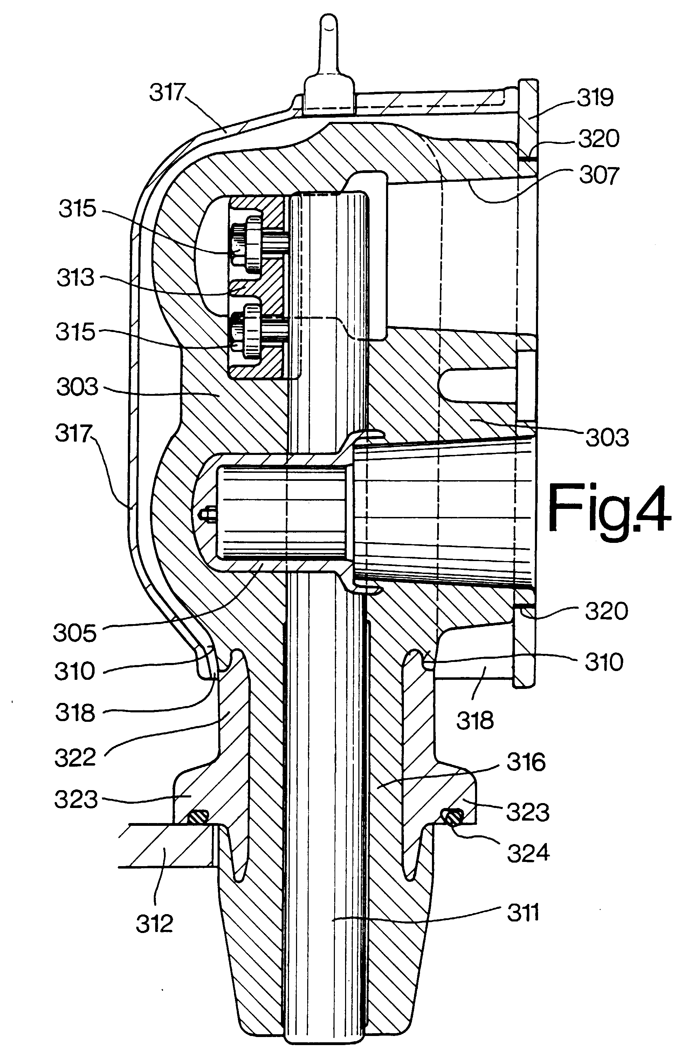

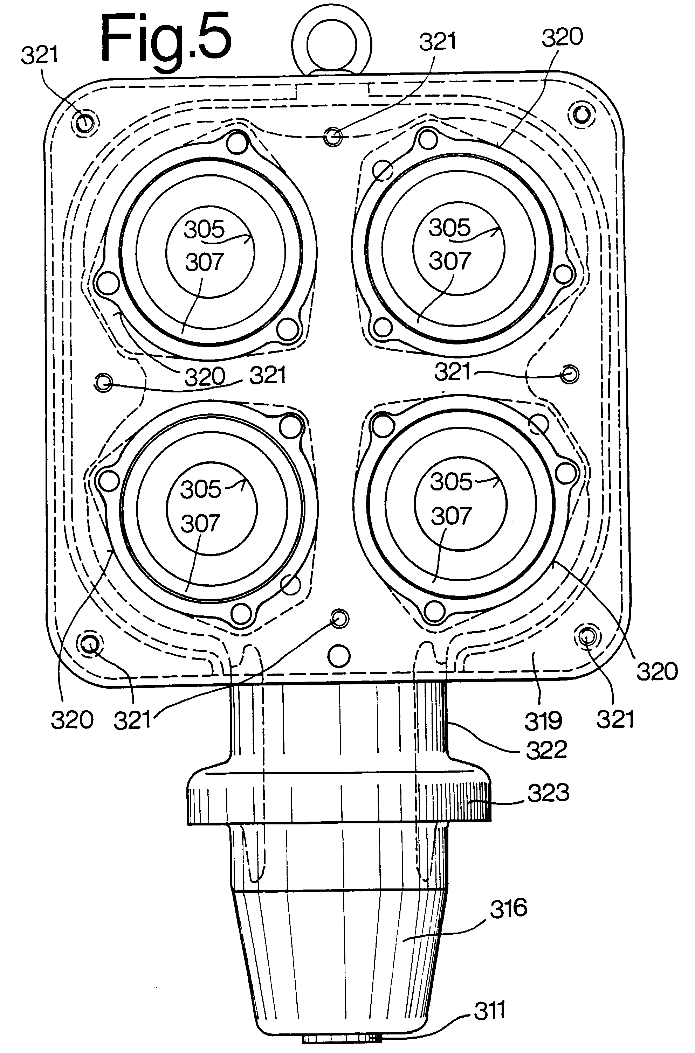

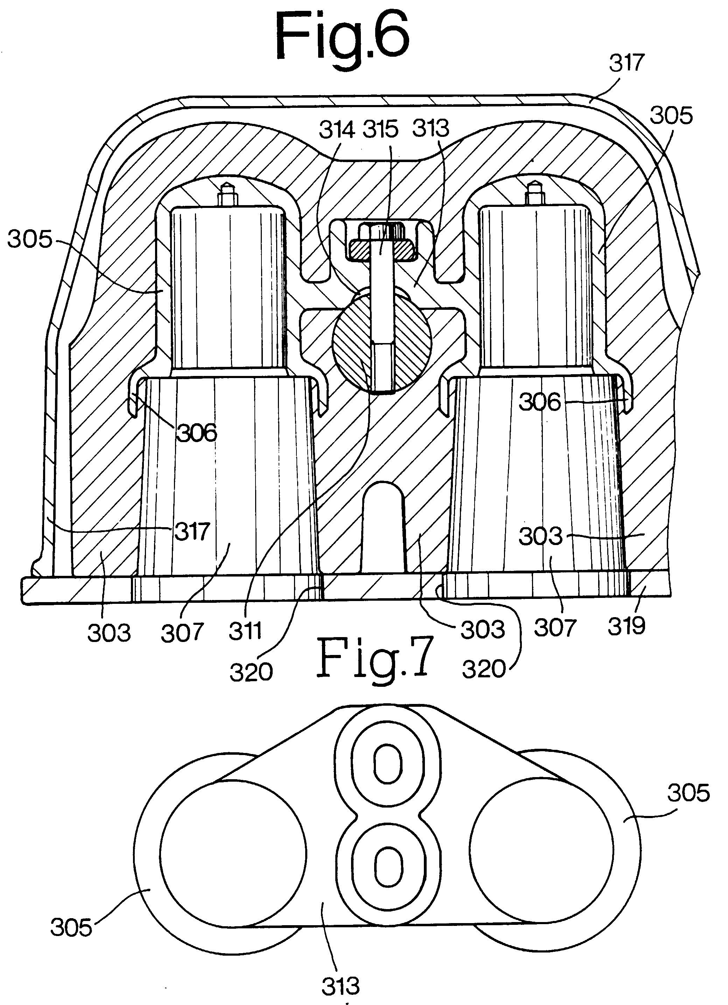

Bei dem Ausführungsbeispiel gemäß den Fig. 4 bis 7 handelt es sich um einen Transformator-Vierfachanschluß. Ein Anschlußbolzen 311, der eine Öffnung im Deckel 312 eines nicht dargestellten Transformatorgehäuses durchdringt, trägt im Bereich seines oberen Endabschnittes zwei Paare von gleich ausgebildeten sowie parallel und im Abstand nebeneinander angeordneten Kontaktbuchsen 305, die, wie insbesondere die Fig. 6 und 7 zeigen, paarweise durch je einen Steg 313 miteinander verbunden sind, der im Ausführungsbeispiel einstückig mit den beiden durch ihn verbundenen Kontaktbuchsen 305 ausgebildet ist. An das offene Ende der gleich ausgebildeten Kontaktbuchsen 305 ist je ein ringförmiger Feldsteuerkörper 306 angeformt, wie Fig. 6 zeigt. Jeder der beiden Stege 313 ist auf seiner Vorderseite mit einer Längsnut 314 versehen. Mit dieser Längsnut 314 liegt der Steg 313 am Anschlußbolzen 311 an. Zwei den Steg 313 im Bereich der Längsnut 314 durchdringende Schrauben 315 greifen in Querbohrungen des Anschlußbolzens 311 ein, die als Gewindebohrungen ausgebildet sind. Mittels der Schrauben 315 werden die Stege 313 mit der für einen guten Kontakt erforderlichen Kraft an den Anschlußbolzen 311 angepreßt.

Die beiden Stege 313 und die einstückig mit ihnen ausgebildeten Kontaktbuchsen 305, welche zusammen die Anschlußvorrichtung bilden, sind in einen aus Gießharz hergestellten Isolierkörper 303 eingebettet, der an das obere Ende eines ebenfalls aus Gießharz bestehenden Durchführungsisolators 316 angeformt ist und eine kopfartige Vergrößerung des Durchführungsisolators 316 bildet, der den Anschlußbolzen 311 konzentrisch umgibt und die Öffnung im Deckel 312 des Transformatorgehäuses durchdringt.

Wie die Fig. 4 und 6 zeigen, ist im Isolierkörper 303 für jede der Kontaktbuchsen 305 ein auf diese ausgerichteter, konischer Einführungskanal 307 vorgesehen, dessen im Durchmesser kleineres Ende im Abstand von dem zugeordneten Feldsteuerkörper 306 umfaßt wird. Das im Durchmesser größere Ende mündet in einer ebenen Seitenfläche des Isolierkörpers 303. Etwa auf halber Länge der Einführungskanäle 307 beginnend bildet der Isolierkörper gegen das im Durchmesser größere Ende hin nur je eine den Einführungskanal 307 umgebende Hülse, wobei der Raum zwischen den einzelnen Hülsen frei von Gießharz ist.

Der Isolierkörper 303 ist in einem haubenartigen, metallischen Gehäuse 317 angeordnet, das in der dem Deckel 312 zugekehrten Seite eine große Öffnung 318 hat, durch die hindurch der Durchführungsisolator 316 geführt wird, wenn der Isolierkörper 303 in das Gehäuse 317 eingebracht wird. An der offenen Seite des Gehäuses 317 liegt eine Metallplatte 319 an, die mit dem Gehäuse 316 verschraubt ist. Diese Metallplatte 319 ist mit Durchtrittsöffnungen 320 versehen, von denen jede auf einen der Einführungskanäle 307 ausgerichtet ist. Da der Durchmesser dieser Durchtrittsöffnungen 320 größer ist als der Innendurchmesser der Einführungskanäle 307, kann das freie Ende der die Einführungskanäle 307 umgebenden hülsenartigen Teile des Isolierkörpers 303 in die Durchtrittsöffnungen 320 eingreifen. Nicht dargestellte Schrauben durchdringen Bohrungen 321 in der Metallplatte 319 und greifen in Gewindebuchsen ein, welche in den Isolierkörper 303 eingebettet sind.

In jeden der Einführungskanäle 307 kann ein in bekannter Weise ausgebildeter Kabelstecker eingeführt werden, dessen Steckkontakt im eingeführten Zustand des Kabelsteckers die zugeordnete Kontaktbuchse 305 kontaktiert.

Wie Fig. 4 zeigt, ist in den Durchführungsisolator 316 konzentrisch zu dessen Längsachse eine metallische Buchse 322 eingebettet, die nicht nur die Öffnung im Deckel 312 durchdringt, sondern auch in das metallische Gehäuse 317 eingreift und das vom Anschlußbolzen 311 ausgehende elektrische Feld steuert. An die außen freiliegende metallische Buchse 322 ist ein radial nach außen abstehender Flansch 323 angeformt, der im montierten Zustand der Messeranschlußvorrichtung auf der Außenseite des Deckels 312 unter Zwischenlage einer Ringdichtung 324 aufliegt und mittels nicht dargestellter Schrauben gegen den Deckel 312 gespannt wird. Da der Deckel geerdet ist, liegt im montierten Zustand auch die metallische Buchse 322 auf Erdpotential.

Das obere Ende der metallischen Buchse 322 kontaktiert eine aus Aluminium bestehende Leitschicht 310, die aus Aluminium besteht und durch Flammspritzen auf die Außenseite des Isolierkörpers 303 aufgebracht worden ist. Abgesehen von der an der Metallplatte 319 anliegenden ebenen Fläche des Isolierkörpers 303 ist dessen Außenfläche so geformt, daß sich eine optimale Feldverteilung zwischen der Anschlußvorrichtung und der Leitschicht 310 ergibt, d.h., daß überall eine möglichst geringe Feldstärke erreicht wird, so daß der Isolierkörper mit einer minimalen Wanddicke und damit einer minimalen Gießharzmenge ausgeführt sein kann.

## Patentansprüche

1. Armatur für Leiter in Hochspannungs-Energieversorgungsnetzen, insbesondere für Hochspannungs-Energieversorgungskabel, mit einem aus Gießharz bestehenden Isolierkörper (2; 102; 202; 303), in dem eine Kontaktiervorrichtung (5; 205; 205'; 305; 313), auf die wenigstens ein Einführungskanal (7; 207; 307) für ein Kabelende oder eine an diesem vorgesehene Verbindungseinrichtung ausgerichtet ist, angeordnet ist, und mit einem die Kontaktiervorrichtung (5; 205; 205'; 305; 313) sowie den Einführungskanal (7; 207; 307) oder die Einführungskanäle im Abstand umfassenden, elektrisch leitenden Schirm (10; 110; 210; 310),
dadurch gekennzeichent, daß
a) der Schirm durch eine auf die Außenmantelfläche des Isolierkörpers (2; 102; 202; 302) aufgebrachte Leitschicht (10; 110; 210; 310) gebildet ist, und
b) die Außenmantelfläche des Isolierkörpers (2; 102; 202; 303) und damit auch die auf sie aufgebrachte Leitschicht (10; 110; 210; 310) eine Form haben, die einen zumindest weitgehend optimalen Verlauf des elektrischen Feldes zwischen der Kontaktiervorrichtung (5; 205; 205'; 305; 313) und der Leitschicht (10; 110; 210; 310) ergibt.

2. Armatur nach Anspruch 1, dadurch gekennzeichnet, daß der Isolierkörper (303) in einem metallischen Gehäuse (317) angeordnet ist.

3. Armatur nach Anspruch 1, dadurch gekennzeichnet, daß der Isolierkörper (2; 102; 202) einen Innenteil (3; 103; 203) bildet, der zumindest im Bereich seiner die Leitschicht (10; 110; 210) tragenden Außenmantelfläche in einen aus Gießharz bestehenden Außenteil (4; 104; 204) eingegossen ist, der die Außenfläche der Armatur bildet.

4. Armatur nach Anspruch 3, dadurch gekennzeichnet, daß die Leitschicht (10; 110; 210) fest mit der Außenmantelfläche des Innenteils (3; 103; 203) und die Innenmantelfläche des Außenteils (4; 104; 204) fest mit der Leitschicht (10; 110; 210) verbunden sind.

5. Armatur nach einem der Ansprüche 1 bis 4, dadurch gekennzeichnet, daß die Kontaktiervorrichtung (5; 205, 205'; 305, 313) wenigstens einen ebenfalls in den Isolierkörper (3; 103; 203; 303) eingebetteten Feldsteuerkörper (6; 106; 206; 306) aufweist, welcher im Übergangsbereich von der Kontaktiervorrichtung zu den auf sie ausgerichteten Einführungskanälen (7; 207; 307) diese im Abstand umgibt.

6. Armatur nach einem der Ansprüche 1 bis 5, dadurch gekennzeichnet, daß die Leitschicht (10; 110; 210; 310) aus Aluminium besteht.

7. Armatur nach einem der Ansprüche 1 bis 6, dadurch gekennzeichnet, daß bei einer Ausbildung als Muffe die Leitschicht (10; 110; 210) in Kontakt mit Metallkörpern (9; 109; 209) steht, die in den beiden Endabschnitten des Muffenkörpers (2; 102; 202) in diesen eingebettet sind und mit zur benachbarten Stirnseite des Muffenkörpers (2; 102; 202) offenen Gewindebohrungen versehen sind.

8. Armatur nach den Ansprüchen 3 und 7, dadurch gekennzeichnet, daß die Metallkörper durch je einen Ring (109) gebildet sind, der auf einer Sitzfläche (112) des Innenteils (102) des Muffenkörpers aufliegt und in den Außenteil (104) des Muffenkörpers eingebettet ist.

9. Armatur nach Anspruch 8, dadurch gekennzeichnet, daß die beiden Ringe (109) je mit wenigstens einer Verbindungsstelle für wenigstens einen zum anderen Ring verlaufenden verbindungsleiter (114) versehen sind.

10. Armatur nach einem der Ansprüche 1 bis 6, dadurch gekennzeichnet, daß bei einer Ausbildung als Transformator-Mehrfachanschlußvorrichtung der Isolierkörper (303) an das obere Ende eines Durchführungsisolators (316) angeformt ist und einen eine Öffnung des Transformatorgehäuses durchdringenden Anschlußbolzen (311) umgibt, mit dem elektrisch leitend die Kontaktiervorrichtung (305, 313) verbunden ist, die wenigstens zwei parallel und im Abstand nebeneinander angeordnete Kontaktbuchsen (305) für je einen Kabelstecker bilden, und daß der Isolierkörper (303) sich in einem haubenförmigen, metallischen Gehäuse (317) befindet, das in seiner Wand mit einer Durchtrittsöffnung für den Durchführungsisolator (316) versehen und auf seiner offenen Seite, in der die Einführungskanäle (307) münden, mit einer Metallplatte (319) verschlossen ist, die auf die Einführungskanäle (307) ausgerichtete Durchtrittsöffnungen (320) für die Kabelstecker aufweist.

11. Armatur nach Anspruch 10, dadurch gekennzeichnet, daß das Metallgehäuse (317) einstückig ausgebildet ist.

12. Armatur nach Anspruch 10 oder 11, dadurch gekennzeichnet, daß jeweils zwei der Kontaktbuchsen (307) durch einen Steg (313) einstückig miteinander ausgebildet sind, der am Anschlußbolzen (311) anliegt und mittels wenigstens einer Schraube an diesen angepreßt wird.

13. Verfahren zur Herstellung einer Armatur gemäß Anspruch 1, dadurch gekennzeichnet, daß
a) der Isolierkörper aus Gießharz gegossen und dabei die Kontaktiervorrichtung umgossen wird,
b) die Außenmantelfläche des Isolierkörpers mit einer Leitschicht versehen wird,
c) falls ein Außenteil vorgesehen ist, dieser in einem weiteren Arbeitsgang mit dem die Leitschicht tragenden Isolierkörper als Kern mit Gießharz gegossen wird.

14. Verfahren nach Anspruch 13, dadurch gekennzeichnet, daß die Leitschicht durch Flammspritzen aufgebracht wird.

## Claims

1. Fitting for conductors in high-tension energy-supply networks, particularly for high-tension energy-supply cables, with an insulation body (2; 102; 202; 303) composed of cast resin, in which there is a contact device (5; 205; 205'; 305; 313) with which at least one lead-in duct (7; 207; 307) for a cable end or for a connection device provided thereon is aligned, and with an electrically-conductive screen (10; 110; 210; 310) surrounding the contact device (5; 205; 205'; 305; 313) as well as the lead-in duct (7; 207; 307) or the lead-in ducts,
characterized in that
a) the screen is formed by a conductive layer (10; 110; 210; 310) applied to the outer lateral surface of the insulation body (2; 102; 202; 302), and
b) the outer lateral surface of the insulation body (2; 102; 202; 303), and thus also the conductive layer (10;110; 210; 310) applied thereto, have a shape which results in an at least largely optimal path of the electric field between the contact device (5; 205; 205'; 305; 313) and the conductive layer (10; 110; 210; 310).

2. Fitting according to Claim 1, characterized in that the insulation body (303) is disposed in a metal housing (317).

3. Fitting according to Claim 1, characterized in that the insulation body (2; 102; 202) forms an inner portion (3; 103; 203) which, at least in the region of its outer lateral surface carrying the conductive layer (10; 110; 210), is cast in an outer portion (4; 104; 204) composed of cast resin, which forms the outer surface of the fitting.

4. Fitting according to Claim 3, characterized in that the conductive layer (10; 110; 210) is connected firmly to the outer lateral surface of the inner portion (3; 103; 203) and the inner lateral surface of the outer portion (4; 104; 204) is connected firmly to the conductive layer (10; 110; 210).

5. Fitting according to any one of Claims 1 to 4, characterized in that the contact device has at least one field-guide body (6; 106; 206; 306) which is also embedded in the insulation body (3; 103; 203; 303) and which surrounds the contact device (5; 205, 205'; 305, 313) with clearance in the junction region from the contact device to the lead-in ducts (7, 207; 307) aligned therewith.

6. Fitting according to any one of Claims 1 to 5, characterized in that the conductive layer (10; 110; 210; 310) is composed of aluminium.

7. Fitting according to any one of Claims 1 to 6, characterized in that, in an embodiment as a sleeve, the conductive layer (10; 110; 210) is in contact with metal bodies (9; 109; 209) which are embedded in the two end portions of the sleeve body (2; 102; 202) and are provided with threaded holes open towards the adjacent end faces of the sleeve body (2; 102; 202).

8. Fitting according to Claims 3 and 7, characterized in that each metal body is formed by a ring (109) which bears on a seat (112) of the inner portion (102) of the sleeve body and is embedded in the outer portion (104) of the sleeve body.

9. Fitting according to Claim 8, characterized in that each of the two rings (109) is provided with at least one connection point for at least one connection lead (114) extending to the other ring.

10. Fitting according to any one of Claims 1 to 6, characterized in that, in an embodiment as a transformer multiple-connection device, the insulation body (303) is formed on the upper end of a bushing insulator (316) and surrounds a connecting pin (311) which extends through an opening of the transformer housing and to which is connected, in an electrically conductive manner, the contact device (305, 313), which forms at least two parallel and spaced-apart contact sockets (305) for respective cable plugs, and in that the insulation body (303) is disposed in a hood-shaped metal housing (317) which has a through hole in its wall for the bushing insulator (316) and is closed, on its open side in which the lead-in ducts (307) open, by a metal plate (319) which has through holes (320), aligned with the lead-in ducts (307), for the cable plugs.

11. Fitting according to Claim 10, characterized in that the metal housing (317) is formed in one piece.

12. Fitting according to Claim 10 or Claim 11, characterized in that every two contact sockets (307) are formed integrally with one another by means of a bridge (313) which bears on the connecting pin (311) and is pressed against it by means of at least one screw.

13. Method of manufacturing a fitting according to Claim 1, characterized in that
a) the insulation body is cast from casting resin and, moreover, is cast around the contact device,
b)the outer lateral surface of the insulation body is provided with a conductive layer,
c)if an outer portion is provided, this is cast with casting resin in a further step with the insulation body carrying the conductive layer as a core.

14. Method according to Claim 13, characterized in that the conductive layer is applied by flame spraying.

## Revendications

1. Armature pour conducteurs dans des réseaux d'alimentation en énergie haute-tension, notamment pour câbles d'alimentation en énergie haute-tension, comprenant un corps isolant (2; 102 ; 202 ; 303) constitué de résine moulée et dans lequel est disposé un dispositif d'établissement de contact (5 ; 205 ; 205' ; 305 ; 313) avec lequel est aligné au moins un canal d'entrée (7 ; 207 ; 307) pour une extrémité de câble ou un système de raccordement prévu sur celle-ci, ainsi qu'une gaine électriquement conductrice (10 ; 110 ; 210; 310) entourant à distance le dispositif d'établissement de contact (5 ; 205 ; 205' ; 305 ; 313) et aussi le canal d'entrée (7 ; 207 ; 307) ou les canaux d'entrée,
caractérisée en ce que
a) la gaine est formée par une couche conductrice (10 ; 110 ; 210 ; 310) située sur la surface périphérique extérieure du corps isolant (2; 102 ; 202 ; 302) ; et
b) la surface périphérique extérieure du corps isolant (2 ; 102 ; 202 ; 303) et par conséquent également la couche conductrice (10 ; 110 ; 210 ; 310) située sur celle-ci ont une forme qui définit un profil, optimal au moins dans une large mesure, du champ électrique entre le dispositif d'établissement de contact (5 ; 205 ; 205' ; 305 ; 313) et la couche conductrice (10; 110 ; 210 ; 310).

2. Armature selon la revendication 1, caractérisée en ce que le corps isolant (303) est disposé dans un carter métallique (317).

3. Armature selon la revendication 1, caractérisée en ce que le corps isolant (2 ; 102 ; 202) constitue une pièce intérieure (3 ; 103 ; 203) qui est moulée, au moins dans une zone de sa surface périphérique extérieure portant la couche conductrice (10 ; 110 ; 210), dans une pièce extérieure (4 ; 104; 204), se composant de résine moulée et constituant la surface extérieure de l'armature.

4. Armature selon la revendication 3, caractérisée en ce que la couche conductrice (10 ; 110 ; 210) est reliée solidement à la surface périphérique extérieure de la pièce intérieure (3 ; 103 ; 203) et la surface périphérique intérieure de la pièce extérieure (4 ; 104 ; 204) est reliée solidement à la couche conductrice (10 ; 110 ; 210).

5. Armature selon une des revendications 1 à 4, caractérisée en ce que le dispositif d'établissement de contact (5 ; 205 ; 205' ; 305 ; 313) comporte au moins un corps de commande de champ (6 ; 106 ; 206 ; 306), noyé également dans le corps isolant (3; 103 ; 203 ; 303) et qui, dans la zone de transition entre le dispositif d'établissement de contact et les canaux d'entrée (7 ; 207 ; 307) alignés sur celui-ci, les entoure à distance.

6. Armature selon une des revendications 1 à 5, caractérisée en ce que la couche conductrice (10; 110; 210; 310) est formée d'aluminium.

7. Armature selon une des revendications 1 à 6, caractérisée en ce que, dans le cas d'un agencement sous forme de manchon, la couche conductrice (10 ; 110 ; 210) est en contact avec des éléments métalliques (9; 109 ; 209) qui sont noyés dans les deux parties extrêmes du corps de manchon (2 ; 102 ; 202) et qui sont pourvus de trous filetés ouverts en direction du côté frontal adjacent du corps de manchon (2 ; 102 ; 202).

8. Armature selon les revendications 3 et 7, caractérisée en ce que les éléments métalliques sont chacun constitués par une bague (109) qui s'applique contre une surface d'appui (112) de la partie intérieure (102) du corps de manchon et qui est noyée dans la partie extérieure (104) de ce corps de manchon.

9. Armature selon la revendication 8, caractérisée en ce que les deux bagues (109) sont chacune pourvues d'au moins une zone de liaison pour au moins un conducteur de liaison (114) aboutissant à l'autre bague.

10. Armature selon une des revendications 1 à 6, caractérisée en ce que, dans le cas d'un agencement sous forme d'un dispositif de raccordement multiple de transformateur, le corps isolant (303) est formé à l'extrémité supérieure d'un isolateur de traversée (316) et entoure une broche de liaison (311) passant par une ouverture de la cuirasse de transformateur et avec laquelle est relié, de façon électriquement conductrice, le dispositif d'établissement de contact (305, 313) qui comporte au moins deux douilles de contact, disposées parallèlement et à distance l'une à côté de l'autre pour recevoir chacune une fiche de câble, et en ce que le corps isolant (303) est situé dans un carter métallique (317) en forme de hotte, qui est pourvu dans sa paroi d'une ouverture de passage pour l'isolateur de traversée (316) et qui est fermé, sur son côté ouvert dans lequel débouchent les canaux d'entrée (307), par une plaque métallique (319) qui comporte des ouvertures (320), alignées sur les canaux d'entrée (307), pour les fiches de câble.

11. Armature selon la revendication 10, caractérisée en ce que le carter métallique (317) est réalisé d'une seule pièce.

12. Armature selon la revendication 10 ou 11, caractérisée en ce que respectivement deux des douilles de contact (307) sont liées entre elles de façon unitaire par un voile (313) qui s'applique contre la broche de liaison (311) et qui est serré contre celle-ci à l'aide d'au moins une vis.

13. Procédé de fabrication d'une armature selon la revendication 1, caractérisé en ce que :
a) le corps isolant est formé d'une résine moulable et il est alors moulé autour du dispositif d'établissement de contact,
b) la surface périphérique extérieure du corps isolant est pourvue d'une couche conductrice,
c) dans le cas où il est prévu une partie externe, celle-ci, dans une autre opération, est liée par moulage de résine moulable avec le corps isolant portant la couche conductrice et servant de noyau.

14. Procédé selon la revendication 13, caractérisé en ce que la couche conductrice est déposée par projection à la flamme.
